# EUROPEAN PATENT APPLICATION

(11) **EP 4 623 698 A1**
(43) Date of publication of application: **01.10.2025**
(21) Application number: 23907613.6
(22) Date of filing: 15.12.2023
(51) Int. Cl.: A23G 3/52, A23G 3/42, A23C 13/12, A23G 3/34, A23L 2/60, A23P 20/10

(54) **COMPOSITION FOR PREPARING COTTON CANDY AND METHOD FOR PREPARING COTTON CANDY USING SAME**

(30) Priority: 22.12.2022 KR 20220181869
(71) Applicant: CJ CheilJedang Corporation, Seoul 04560 (KR)
(72) Inventor: LEE, Minhyun, Seoul 04560 (KR); KONG, Moon Hee, Seoul 04560 (KR); JUNG, Jiwoo, Seoul 04560 (KR); KIM, Sunny, Seoul 04560 (KR); KIM, Chul Jin, Seoul 04560 (KR)
(74) Representative: Meissner Bolte Partnerschaft mbB
(86) International application number: PCT/KR2023/020727
(87) International publication number: WO 2024/136327

(57) **Abstract**

The present application relates to a composition for preparing cotton candy, a method for preparing cotton candy using same, and cotton candy prepared by the method.

## Description

### [Technical Field]

The present application relates to a composition for preparing cotton candy, a method for preparing cotton candy using same, and cotton candy prepared by the method.

### [Background Art]

In general, cotton candy is a product that is made by putting sugar powder into a rotating heater to form floss-like crystals, which are then wound onto a stick for serving. When making cotton candy, sugar for cotton candy, which is a mixture of sugar, coloring, and flavoring, is put into a cotton candy making machine, and cotton candy is instantly made and served.

Recently, as consumers' interest in health has increased, attempts are also being made to reduce sugar in cotton candy. However, when sugar is partially replaced with sugar alcohols such as erythritol, maltitol, etc. in order to reduce sugar, the sweetness in the mouth is easily lost, and due to the nature of sugar alcohols, they easily absorb moisture to reduce the volume of cotton candy, which becomes sticky, and thus there is a disadvantage in that the quality is lowered, as compared to cotton candy made with sugar. Accordingly, to improve the aforementioned prevention of moisture absorption, in some cases, sugar for cotton candy has been prepared by additionally mixing with liquid fat and oil, etc. However, in the process of mixing with the liquid fat and oil, sugar crystals clump together or harden, making it difficult to feed a uniform amount of sugar and to retain the shape of cotton candy when making cotton candy. When making cotton candy continuously, an off-flavor is generated due to oxidation of the remaining fat and oil, and thus there is a disadvantage that the sensory quality deteriorates.

### [Prior Art Documents]

### [Patent Documents]

(Patent Document 0001) Chinese Patent Publication No. CN 101869167 A

### [Disclosure]

### [Technical Problem]

A problem to be solved in the present disclosure is to provide a composition for preparing cotton candy, a method of preparing cotton candy, and cotton candy prepared by the preparation method.

### [Technical Solution]

An object of the present disclosure is to provide a composition for preparing cotton candy, the composition comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol.

Another object of the present disclosure is to provide a method of preparing cotton candy, the method comprising the steps of a) preparing a molten product by melting a composition for preparing cotton candy, the composition comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol; and b) feeding the molten product to a distribution plate to form floss-like crystals and preparing cotton candy with the crystals.

Still another object of the present disclosure is to provide cotton candy prepared by the method of the present disclosure.

Still another object of the present disclosure is to provide use of the composition in preparing cotton candy.

### [Advantageous Effects]

By using a composition for preparing cotton candy of the present disclosure, it is possible to prepare cotton candy that is not harmful to health due to the reduction of sugars, retains its shape, is not sticky due to the effects of preventing moisture absorption and retaining the crystal form, and exhibits a sweetness equivalent to that of cotton candy with only sugar.

### [Brief Description of the Drawing]

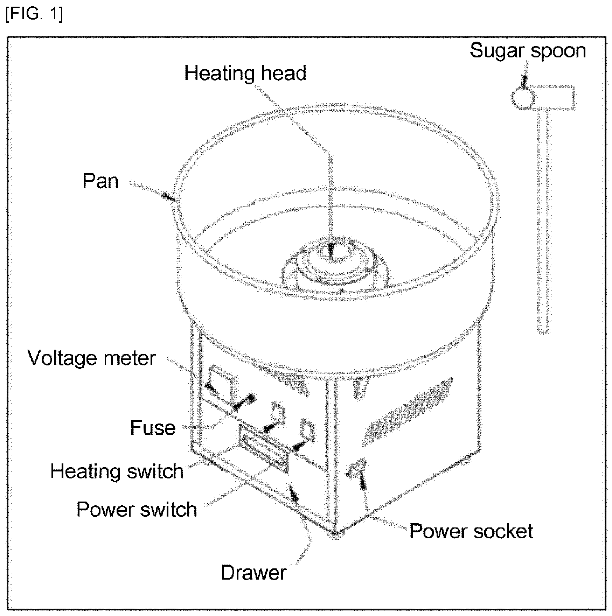

FIG. 1 is a perspective view of a cotton candy making machine.

### [Detailed Description of Preferred Embodiments]

The present disclosure will be described in detail as follows. Meanwhile, each description and embodiment disclosed in this disclosure may also be applied to other descriptions and embodiments. That is, all combinations of various elements disclosed in this disclosure fall within the scope of the present disclosure. Further, the scope of the present disclosure is not limited by the specific description described below. Further, a number of papers and patent documents are referenced and cited throughout this specification. The disclosures of the cited papers and patent documents are incorporated herein by reference in their entirety to further clarify the level and scope of the subject matter to which the present disclosure pertains.

One aspect of the present disclosure provides a composition for preparing cotton candy, the composition comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol.

Recently, as consumers' interest in health has increased, attempts are being made to reduce sugar in cotton candy. However, when sugar is partially replaced with sugar alcohols such as erythritol, maltitol, etc. in order to reduce sugar, the sweetness in the mouth is easily lost, and due to the nature of sugar alcohols, they easily absorb moisture to reduce the volume of cotton candy, which becomes sticky, and thus there is a disadvantage in that the quality deteriorates, as compared to cotton candy made with sugar. Accordingly, to improve the aforementioned prevention of moisture absorption, in some cases, sugar for cotton candy has been prepared by additionally mixing with liquid fat and oil, etc. However, in the process of mixing with the liquid fat and oil, sugar crystals clump together or harden, making it difficult to feed a uniform amount of sugar and to retain the shape of cotton candy when making cotton candy. When making cotton candy continuously, off-flavor is generated due to oxidation of the remaining fat and oil, and thus there is a disadvantage that the sensory quality deteriorates.

Accordingly, in the present disclosure, a composition for preparing cotton candy was prepared, in which sugar alcohol and a sweetener are used to reduce the sugar content, non-dairy creamer as fat and oil and an emulsifier are added to prevent moisture absorption of sugar alcohols and to minimize oxidation of remaining fat and oil, and the same level of sweetness as cotton candy with only sugar is achieved through a process of coating the powder with a sweetener, and when this composition is fed into a cotton candy making machine, the optimal melting temperature conditions for discharge of cotton candy floss and easy implementation of cotton candy were identified. Accordingly, there is an advantageous effect that it is possible to prepare cotton candy that is not harmful to health due to the reduction of sugars, retains its shape, is not sticky due to the effects of preventing moisture absorption and retaining the crystal form, and exhibits a sweetness equivalent to that of cotton candy with only sugar.

**The** composition for preparing cotton candy of the present disclosure may be a composition for preparing cotton candy comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol.

The composition for preparing cotton candy of the present disclosure may comprise the sugar and sugar alcohol at a weight ratio of about 50 to about 70 : about 30 to about 50, for example, may comprise the sugar and sugar alcohol at a weight ratio of about 50 to about 70 : about 30 to about 50, at a weight ratio of about 55 to about 70 : about 30 to about 45, at a weight ratio of about 60 to about 70 : about 30 to about 40, at a weight ratio of about 65 to about 70 : about 30 to about 35.

Specifically, the composition for preparing cotton candy of the present disclosure may comprise about 50 parts by weight to about 70 parts by weight of the sugar, about 30 parts by weight to about 50 parts by weight of the sugar alcohol, about 1 part by weight to about 3 parts by weight of the vegetable fat and oil, and about 0.5 parts by weight to about 1 part by weight of the emulsifier.

Alternatively, the composition for preparing cotton candy of the present disclosure may comprise the sugar and sugar alcohol at a weight ratio of about 1:1, at a weight ratio of about 2:1, at a weight ratio of about 3:1, or at a weight ratio of about 4:1, specifically, at a weight ratio of 1:1 to 4:1.

The sugar may be comprised in the composition for preparing cotton candy of the present disclosure, for example, in a range consisting of a lower limit selected from about 50 parts by weight or more, about 55 parts by weight or more, about 60 parts by weight or more, about 65 parts by weight or more, and about 70 parts by weight or more, and/or an upper limit selected from about 70 parts by weight or less, about 65 parts by weight or less, about 60 parts by weight or less, about 55 parts by weight or less, and about 50 parts by weight or less.

In the present disclosure, the sugar alcohol of the present disclosure may comprise, without limitation, any sugar alcohol known in the art, and examples thereof may comprise erythritol, maltitol, xylitol and sorbitol, etc. For example, the sugar alcohol of the present disclosure may be erythritol.

The sugar alcohol may be comprised in the composition for preparing cotton candy of the present disclosure, for example, in a range consisting of a lower limit selected from about 30 parts by weight or more, about 35 parts by weight or more, about 40 parts by weight or more, about 45 parts by weight or more, and about 50 parts by weight or more, and/or an upper limit selected from about 50 parts by weight or less, about 45 parts by weight or less, about 40 parts by weight or less, about 35 parts by weight or less, and about 30 parts by weight or less.

The sugar alcohol may be added to the composition for preparing cotton candy of the present disclosure, thereby reducing sugars in the cotton candy prepared using the same.

In the present disclosure, the vegetable fat and oil of the present disclosure may comprise, without limitation, any vegetable fat and oil known in the art, and examples thereof may comprise vegetable cream.

The vegetable cream may be a vegetable cream in the form of powder. **In** the present disclosure, the vegetable cream in the form of powder may be used interchangeably with non-dairy creamer, vegetable creamer, and cream.

The non-dairy creamer may be comprised in the composition for preparing cotton candy of the present disclosure, for example, in a range consisting of a lower limit selected from about 1 part by weight or more, about 1.5 parts by weight or more, about 2 parts by weight or more, about 2.5 parts by weight or more, and about 3 parts by weight or more, and/or an upper limit selected from about 3 parts by weight or less, about 2.5 parts by weight or less, about 2 parts by weight or less, about 1.5 parts by weight or less, and about 1 part by weight or less.

The non-dairy creamer of the present disclosure may comprise, without limitation, any non-dairy creamer known in the art.

The non-dairy creamer may comprise any one or more selected from the group consisting of hydrogenated palm oil, sunflower oil, palm oil, etc. For example, the non-dairy creamer of the present disclosure may comprise hydrogenated palm oil.

The non-dairy creamer may be comprised in the composition for preparing cotton candy of the present disclosure at a weight ratio of about 10% to about 50% of any one or more selected from the group consisting of hydrogenated palm oil, sunflower oil, palm oil, etc. with respect to the total weight of the vegetable fat and oil.

The non-dairy creamer, for example, any one or more selected from the group consisting of hydrogenated palm oil, sunflower oil, palm oil, etc. may be comprised in a weight ratio range consisting of a lower limit selected from about 10% or more, about 15% or more, about 20% or more, and about 25% or more, and/or an upper limit selected from about 50% or less, about 45% or less, about 40% or less, and about 35% or less with respect to the total weight of the vegetable fat and oil.

The non-dairy creamer may be prepared by a method known in the art. For example, the non-dairy creamer may be prepared by mixing the vegetable fat and oil, such as hydrogenated palm oil, sunflower oil, palm oil, etc. : low-sugar starch syrup at a weight ratio of 30:70, additionally mixing with an emulsifier and a stabilizer, etc., and then powdering the mixture, but is not limited thereto, and a commercially available product may be purchased for use.

Since sugar alcohols such as erythritol, etc. easily absorb moisture due to the nature thereof, the volume of cotton candy decreases and it becomes sticky. Therefore, moisture absorption of sugar alcohols may be prevented by adding the non-dairy creamer to the composition for preparing cotton candy of the present disclosure. In addition, by adding the vegetable cream, which is vegetable fat and oil, in the form of powder to the composition of the present disclosure, oxidation of remaining fat and oil may be minimized, thereby preventing occurrence of off-flavor and deterioration of sensory quality.

In the present disclosure, the emulsifier of the present disclosure may comprise, without limitation, any emulsifier known in the art, and examples thereof may comprise sucrose fatty acid ester, lecithin, glycerin fatty acid ester, etc. For example, the emulsifier of the present disclosure may be sucrose fatty acid ester.

The emulsifier may be comprised in the composition for preparing cotton candy of the present disclosure, for example, in a range consisting of a lower limit selected from about 0.5 parts by weight or more, about 0.6 parts by weight or more, about 0.7 parts by weight or more, about 0.8 parts by weight or more, about 0.9 parts by weight or more, and about 1 part by weight or more, and/or an upper limit selected from about 1 part by weight or less, about 0.9 parts by weight or less, about 0.8 parts by weight or less, about 0.7 parts by weight or less, about 0.6 parts by weight or less, and about 0.5 parts by weight or less.

In the process of mixing the fat and oil with sugar for cotton candy, sugar crystals clump together or harden, making it difficult to feed a uniform amount of sugar and to retain the shape of cotton candy during the preparation of cotton candy. Therefore, the emulsifier is added to the composition for preparing cotton candy of the present disclosure to facilitate the mixing of the non-dairy creamer with the mixed powder comprising sugar and sugar alcohol, thereby preventing the shape of cotton candy from collapsing, and providing the effect of retaining the crystal form (volume).

As for the sugar, sugar alcohol, vegetable fat and oil, and emulsifier, those commercially available may be purchased for use.

Further, the sugar, sugar alcohol, vegetable fat and oil, and emulsifier may be those for foods.

As used herein, the term "about" may be presented before a particular numerical value. The term "about" used herein comprises not only the exact number recited after the term, but also a range that is near or close to that number. Considering the context in which the number is presented, it may be determined whether any number is close to or near the particular number presented. **In** one example, the term "about" may refer to a range from -10% to +10% of a numerical value. In another example, the term "about" may refer to a range from -5% to +5% of a given numerical value, but is not limited thereto.

The composition for preparing cotton candy of the present disclosure may be in the form of powder.

The composition for preparing cotton candy of the present disclosure may be a composition in which a sweetener is coated on the outer surface of the powder.

In the present disclosure, the sweetener of the present disclosure may comprise, without limitation, any sweetener known in the art, and examples thereof may comprise sucralose, enzymatically modified stevia, steviol glycosides, aspartame, allulose, etc. For example, the sweetener of the present disclosure may be sucralose.

Since sugar alcohols such as erythritol, etc. easily lose their sweetness in the mouth, a sugar substitute sweetener may be coated on the outer surface of the mixed powder of the composition for preparing cotton candy of the present disclosure to supplement the sweetness of the aftertaste, thereby allowing the cotton candy with reduced sugar to have the same sweetness as cotton candy traditionally prepared with only sugar.

In one embodiment, the coating may be performed by spraying the sweetener dissolved in hot water onto the powder while mixing the same to prepare powder coated with the sweetener. The hot water may be purified water that is heated by a method, such as steam, etc.

The hot water may be hot water at about 70°C to about 90°C. For example, the hot water may be in a temperature range consisting of a lower limit selected from about 70°C or higher, about 71°C or higher, about 72°C or higher, about 73°C or higher, about 74°C or higher, about 75°C or higher, about 76°C or higher, about 77°C or higher, about 78°C or higher, and about 79°C or higher, and/or an upper limit selected from about 80°C or lower, about 79°C or lower, about 78°C or lower, about 77°C or lower, about 76°C or lower, about 75°C or lower, about 74°C or lower, about 73°C or lower, about 72°C or lower, and about 71°C or lower.

The sweetener may be comprised in the hot water at a concentration of about 10% by weight to about 50% by weight. For example, the sweetener may be comprised in the hot water in a concentration range consisting of a lower limit selected from about 10% by weight or more, about 15% by weight or more, about 20% by weight or more, about 25% by weight or more, about 30% by weight or more, about 35% by weight or more, about 40% by weight or more, and about 45% by weight or more.

In another embodiment, the coating may be to remove moisture by additionally treating the sweetener-coated powder with hot air.

The hot air may be hot air at about 75°C to about 95°C. For example, the hot air may be in a temperature range consisting of a lower limit selected from about 75°C or higher, about 77°C or higher, about 79°C or higher, about 81°C or higher, about 83°C or higher, and about 84°C or higher, and/or an upper limit selected from about 95°C or lower, about 93°C or lower, about 91°C or lower, about 89°C or lower, about 87°C or lower, and about 86°C or lower.

The hot air may be treated for about 5 minutes to about 15 minutes, but is not limited thereto, and may be appropriately treated for a time range in which moisture may be removed from the sweetener coated on the outer surface of the powder.

Another aspect of the present disclosure provides a method of preparing cotton candy, the method comprising the steps of a) preparing a molten product by melting the composition for preparing cotton candy, the composition comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol; and b) feeding the molten product to a distribution plate to form floss-like crystals and preparing cotton candy with the crystals.

In the method of the present disclosure, the step a) may be to prepare a molten product by melting the composition for preparing cotton candy, the composition comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol.

In the present disclosure, the composition of the step a) is a composition for preparing cotton candy comprising sugar, sugar alcohol, vegetable fat and oil, and the emulsifier, wherein the composition may comprise sugar and sugar alcohol at a weight ratio of 1:1 to 4:1. This is as described above.

In the present disclosure, the composition of the step a) may comprise 50 parts by weight to 70 parts by weight of the sugar, 30 parts by weight to 50 parts by weight of the sugar alcohol, 1 part by weight to 3 parts by weight of the vegetable fat and oil, and 0.5 parts by weight to 1 part by weight of the emulsifier. This is as described above.

The sugar alcohol may be erythritol, maltitol, xylitol and sorbitol, etc., for example, erythritol. This is as described above.

The vegetable fat and oil may be non-dairy creamer. The non-dairy creamer may comprise any one or more selected from the group consisting of hydrogenated palm oil, sunflower oil, palm oil, etc., for example, hydrogenated palm oil. This is as described above.

The emulsifier may be sucrose fatty acid ester, lecithin, glycerin fatty acid ester, etc., for example, sucrose fatty acid ester. This is as described above.

The composition of the step a) may be in the form of powder. The composition may be a composition in which a sweetener is coated on the outer surface of the powder. This is as described above.

The sweetener may be sucralose, enzymatically modified stevia, steviol glycoside, aspartame, allulose, etc., for example, sucralose. This is as described above.

The sweetener may be comprised at a concentration of about 10% by weight to about 50% by weight in hot water.

In the step a), the melting may be to melt the composition for preparing cotton candy of the present disclosure at about 220°C to about 250°C.

For example, the melting may be in a temperature range consisting of a lower limit selected from about 220°C or higher, about 230°C or higher, about 240°C or higher, and about 250°C or higher, and/or an upper limit selected from 250°C or lower, about 240°C or lower, about 230°C or lower, and about 220°C or lower.

The melting may be to instantaneously melt the composition for preparing cotton candy of the present disclosure.

After the melting, the composition for preparing cotton candy of the present disclosure, i.e., the molten product, may be in a liquid state.

In the method of the present disclosure, the step b) may be to feed the molten product of the step a) to a distribution plate to form floss-like crystals and preparing cotton candy with the crystals.

In the step b), the floss-like crystals may be formed on the distribution plate that rotates at about 3600 rpm to about 3800 rpm.

For example, the rotation may be performed in a range consisting of a lower limit selected from about 3600 rpm or more, about 3650 rpm or more, about 3700 rpm or more, and about 3750 rpm or more, and/or an upper limit selected from about 3800 rpm or less, about 3750 rpm or less, about 3700 rpm or less, and about 3650 rpm or less.

The floss-like crystals formed as described above may be wound in layers around a stick-shaped shaft to prepare cotton candy.

Still another aspect of the present disclosure provides cotton candy prepared by the method of the present disclosure.

The method is as described above.

The cotton candy prepared by the method of the present disclosure may have the effect of preventing moisture absorption.

The cotton candy prepared by the method of the present disclosure may have the effect of retaining the crystal form.

Still another aspect of the present disclosure provides use of the composition comprising sugar, sugar alcohol, vegetable fat and oil, and the emulsifier in preparing cotton candy.

Still another aspect of the present disclosure provides use of the composition comprising sugar, sugar alcohol, vegetable fat and oil, and the emulsifier in preparing cotton candy having the effects of preventing moisture absorption or retaining the crystal form.

The terms used herein are as described in the previous aspects.

In the present disclosure, the cotton candy is not harmful to health due to the reduction of sugars, retains its shape, is not sticky due to the effects of preventing moisture absorption and retaining the crystal form, and exhibits a sweetness equivalent to that of cotton candy with only sugar, but is not limited thereto.

### [Mode for Carrying Out the Invention]

Hereinafter, the present disclosure will be described in more detail by way of exemplary embodiments. However, the following exemplary embodiments are only preferred embodiments for illustrating the present disclosure, and thus are not intended to limit the scope of the present disclosure thereto. Meanwhile, technical matters not described in the present specification may be sufficiently understood and easily implemented by those skilled in the technical field of the present disclosure or similar technical fields.

### Example and Comparative Example: Preparation of Composition for Preparing Cotton Candy

Example 1 to Example 6, which are compositions for preparing cotton candy, each comprising sugar (CheilJedang) and erythritol (CheilJedang) or maltitol (CheilJedang) as a sugar substitute sugar alcohol, or allulose (CheilJedang) as a sweetener in order to reduce sugar, and Comparative Example 1 comprising only sugar were prepared in a mixed powder form by adding and mixing raw materials according to Table 1 below.

**[Table 1]**

| Composition (parts by weight) | Comparative Example 1 | Example 1 | Example 2 | Example 3 | Example 4 | Example 5 | Example 6 |
|---|---|---|---|---|---|---|---|
| Sugar | 100 | 70 | 50 | 70 | 60 | 70 | 60 |
| Erythritol | | 30 | 50 | | | | |
| Maltitol powder | | | | 30 | 50 | | |
| Allulose | | | | | | 30 | 50 |
| Total | 100 | 100 | 100 | 100 | 110 | 100 | 110 |

Next, Example 7 to Example 12 were prepared in a mixed powder form by adding and mixing raw materials according to Table 2 below, which are compositions for preparing cotton candy comprising non-dairy creamer (30% hydrogenated palm oil (Samik Dairy), 30% sunflower oil (Samik Dairy), 30% palm oil (Samik Dairy)) as fat and oil in order to prevent moisture absorption by sugar alcohols and to minimize oxidation of the remaining fat and oil, because sugar alcohols, such as erythritol etc., easily absorb moisture due to their nature to reduce the volume of cotton candy, which becomes sticky, and further comprising sucrose fatty acid ester (Namyung Commercial) as an emulsifier.

The non-dairy creamer was prepared by mixing vegetable oils, such as hydrogenated palm oil, sunflower oil, and palm oil, etc.,: low-sugar starch syrup at a weight ratio of 30:70, additionally mixing with an emulsifier and a stabilizer, and then powdering the mixture using a drying method such as spray drying, etc.

**[Table 2]**

| Composition (parts by weight) | Example 1 | Example 7 | Example 8 | Example 9 | Example 10 | Example 11 | Example 12 |
|---|---|---|---|---|---|---|---|
| Sugar | 70 | 70 | 50 | 70 | 50 | 70 | 50 |
| Erythritol | 30 | 30 | 50 | 30 | 50 | 30 | 50 |
| **30% Hydrogenated palm oil** | | **1** | **3** | | | | |
| **30% Sunflower oil** | | | | **1** | **3** | | |
| **30% Palm oil** | | | | | | **1** | **3** |
| Sucrose fatty acid ester | | 0.5 | 0.5 | 0.5 | 0.5 | 0.5 | 0.5 |
| Total | 100 | 101.5 | 103.5 | 101.5 | 103.5 | 101.5 | 103.5 |

Next, Example 13 to Example 17 were prepared in a mixed powder form by adding and mixing raw materials according to Table 3 below, which are compositions for preparing cotton candy comprising lecithin (Namyung Commercial) or glycerin fatty acid ester (YeeYon Chemicals), in addition to sucrose fatty acid ester, as an emulsifier in order to facilitate the mixing of the non-dairy creamer with the mixed powder comprising sugar and sugar alcohol, thereby preventing the shape of cotton candy from collapsing, and providing the effect of retaining the crystal form (volume), because, in the process of mixing the fat and oil with sugar for cotton candy, sugar crystals clump together or harden, making it difficult to feed a uniform amount of sugar and to retain the shape of cotton candy during the preparation of cotton candy.

**[Table 3]**

| Composition (parts by weight) | Example 1 | Example 7 | Example 13 | Example 14 | Example 15 | Example 16 | Example 17 |
|---|---|---|---|---|---|---|---|
| Sugar | 70 | 70 | 50 | 70 | 50 | 70 | 50 |
| Erythritol | 30 | 30 | 50 | 30 | 50 | 30 | 50 |
| 30% Hydrogenated palm oil | | 1 | 3 | 1 | 3 | 1 | 3 |
| **Sucrose fatty acid ester** | | **0.5** | **1** | | | | |
| **Lecithin** | | | | **0.5** | **1** | | |
| **Glycerin fatty acid ester** | | | | | | **0.5** | **1** |
| Total | 100 | 101.5 | 104 | 101.5 | 104 | 101.5 | 104 |

Next, Example 18 to Example 25 were prepared by adding and mixing raw materials according to Table 4 below, which are compositions for preparing cotton candy, in which the outer surface of the mixed powder was coated with enzymatically modified stevia (Daepyung), steviol glycoside (Daepyung), aspartame (Daesang), or sucralose (T&L) as a sugar substitute sweetener to supplement the sweetness in the aftertaste, because sugar alcohols, such as erythritol, etc., easily lose their sweetness in the mouth.

In addition, as a process of coating the mixed powder to complement the sweetness of the aftertaste, when the composition for preparing cotton candy is prepared, sugar and erythritol were subjected to primary mixing in a powder mixer for 10 minutes, and then 30% hydrogenated palm oil and sucrose fatty acid ester were added and subjected to secondary mixing to prepare the composition in a mixed powder form. Enzymatically modified stevia, steviol glycoside, aspartame, or sucralose, which were dissolved as a sweetener in hot water at 80°C or higher to make a 50% solution, was sprayed onto the mixed powder three times for 1 minute under mixing to evenly coat the outer surface of the mixed powder with the sweetener. Thereafter, the mixed powder coated with the sweetener was treated with hot air at 85°C or higher in a mixer for 10 minutes to remove moisture, thereby preparing each composition for preparing cotton candy in the form of a mixed powder, of which the outer surface was coated with the sweetener.

**[Table 4]**

| Composition (parts by weight) | Comparative Example 1 | Exampl e 18 | Exampl e 19 | Exampl e 20 | Exampl e 21 | Exampl e 22 | Exampl e 23 | Exampl e 24 | Exampl e 25 |
|---|---|---|---|---|---|---|---|---|---|
| Sugar | 100 | 70 | 50 | 70 | 50 | 70 | 50 | 70 | 50 |
| Erythritol | | 30 | 50 | 30 | 50 | 30 | 50 | 30 | 50 |
| 30% Hydrogenated palm oil | | 1 | 3 | 1 | 3 | 1 | 3 | 1 | 3 |
| Sucrose fatty acid ester | | 0.5 | 1 | 0.5 | 1 | 0.5 | 1 | 0.5 | 1 |
| **Enzymatically modified stevia** | | **0.1** | **0.15** | | | | | | |
| **Steviol glycoside** | | | | **0.1** | **0.15** | | | | |
| **Aspartame** | | | | | | **0.1** | **0.15** | | |
| **Sucralose** | | | | | | | | **0.05** | **0.08** |
| Total | 100 | 101.6 | 104.15 | 101.6 | 104.15 | 101.6 | 104.15 | 101.55 | 104.08 |

The compositions for preparing cotton candy of Example 1 to Example 25 and Comparative Example 1 prepared above were each put into a heating head of a cotton candy making machine (KWS-W7000D, Kumkangworld) of FIG. 1 using a spoon, and treated at a high temperature of 250°C or higher to instantly melt the mixed powder. The molten product was fed to a distribution plate at 3700 rpm and allowed to cool and form floss-like crystals as it spread and separated thinly and long through the holes and mesh plates. The floss-like crystals formed on the distribution plate were wound in layers around a stick-shaped shaft to prepare cotton candy.

### Experimental Example

### Experimental Example 1: Determination of Optimal Blending Ratio of Sugar and Sugar Substitute Sugar Alcohol through Implementation of Cotton Candy

The compositions for preparing cotton candy of Example 1 to Example 6 and Comparative Example 1 were each used to prepare cotton candy in a cotton candy making machine, and the implementation of cotton candy was visually examined, which is shown in Table 5 below.

As a result, cotton candy was implemented in Comparative Example 1 comprising only sugar and Example 1 and Example 2 comprising sugar and erythritol in an amount of 30 parts by weight to 50 parts by weight, whereas Example 3 and Example 4 comprising sugar and maltitol showed a phenomenon where the floss crystals were broken, and Example 5 and Example 6 comprising sugar and allulose had deterioration of the product quality due to browning and burning smell of the cotton candy.

Accordingly, Example 1 and Example 2 comprising 30 parts by weight to 50 parts by weight of sugar and erythritol were confirmed to produce cotton candy identical to the cotton candy of Comparative Example 1 prepared with only sugar, while reducing the sugar content by 30% or more.

**[Table 5]**

| | Comparative Example 1 | Example 1 | Example 2 | Example 3 | Example 4 | Example 5 | Example 6 |
|---|---|---|---|---|---|---|---|
| Implementation of cotton candy | O | O | O | X (broken) | X (broken) | X (browning) | X (browning) |

### Experimental Example 2: Determination of Optimal Blending Ratio of Fat and Oil through Effect of Preventing Moisture Absorption

The compositions for preparing cotton candy of Example 1 and Example 7 to Example 12 were each used to prepare cotton candy in a cotton candy making machine, and the degree of moisture absorption thereof is shown in Table 6 below.

In detail, the degree of moisture absorption was determined by the increase rate (%) of the weight after 5 minutes, 10 minutes, 15 minutes, and 20 minutes, relative to the weight (initial weight) immediately after preparing the cotton candy, and it was determined that the lower the weight increase rate, the better the effect of preventing moisture absorption.

As a result, Example 7 and Example 8 comprising 1 part by weight to 3 parts by weight of 30% hydrogenated palm oil among non-dairy creamer (30% hydrogenated palm oil (Samik Dairy), 30% sunflower oil (Samik Dairy), 30% palm oil (Samik Dairy)) as fat and oil, which were added to prevent moisture absorption of sugar alcohols in the composition for preparing cotton candy, showed the lowest weight increase rate of 5% to 6%, indicating the excellent effect of preventing moisture absorption.

**[Table 6]**

| | Example 1 | Example 7 | Example 8 | Example 9 | Example 10 | Example 11 | Example 12 |
|---|---|---|---|---|---|---|---|
| Initial weight (g) | 10 | 10 | 10 | 10 | 10 | 10 | 20 |
| Weight after 5 min (g) | 10.4 | 10.3 | 10.2 | 10.5 | 10.7 | 10.4 | 10.6 |
| Weight after 10 min (g) | 10.7 | 10.4 | 10.3 | 10.8 | 10.8 | 10.5 | 10.8 |
| Weight after 15 min (g) | 11.2 | 10.4 | 10.4 | 11 | 11.1 | 10.5 | 10.9 |
| Weight after 20 min (g) | 11.9 | 10.5 | 10.6 | 11.2 | 11.5 | 10.6 | 11 |
| Increase rate (%) | 19% | 5% | 6% | 12% | 15% | 6% | 10% |

### Experimental Example 3: Determination of Optimal Blending Ratio of Emulsifier through Effect of Retaining Crystal Form (Volume)

The compositions for preparing cotton candy of Example 1, Example 7, and Example 13 to Example 17 were each used to prepare cotton candy in a cotton candy making machine, and the degree of retention of the crystal form thereof is shown in Table 7 below.

In detail, the degree of retention of the crystal form was determined by the reduction rate (%) of the height after 5 minutes, 10 minutes, 15 minutes, and 20 minutes, relative to the height (initial height) immediately after preparing the cotton candy, and it was determined that the lower the height reduction rate, the better the effect of retaining the crystal form.

As a result, it was confirmed that Example 7 and Example 13 comprising 0.5 parts by weight to 1 part by weight of sucrose fatty acid ester which is a hydrophilic emulsifier, among sucrose fatty acid ester, lecithin, and glycerin fatty acid ester as emulsifiers, showed the lowest height reduction rate of -10% to -16%, indicating that the volume may be maintained for a long time due to the excellent effect of retaining the crystal form.

In particular, it was confirmed that Example 7 and Example 13 had a remarkable effect of retaining the crystal form, as compared to the cotton candy of Example 1, which was prepared without fat and oil and the emulsifier.

**[Table 7]**

| | Example 1 | Example 7 | Example 13 | Example 14 | Example 15 | Example 16 | Example 17 |
|---|---|---|---|---|---|---|---|
| Initial height (cm) | 5 | 5 | 5 | 5 | 5 | 5 | 5 |
| Height after 5 min (cm) | 4.5 | 4.8 | 4.6 | 4.1 | 4.2 | 4.7 | 4.6 |
| Height after 10 min (cm) | 4.1 | 4.7 | 4.5 | 3.8 | 3.6 | 4.6 | 4.3 |
| Height after 15 min (cm) | 3.3 | 4.5 | 4.3 | 3.5 | 3.3 | 4.1 | 3.9 |
| Height after 20 min (cm) | 2.9 | 4.5 | 4.2 | 3.3 | 3 | 3.9 | 3.8 |
| Reduction rate (%) | -42% | -10% | -16% | -34% | -40% | -22% | -24% |

### Experimental Example 4: Determination of Optimal Blending Ratio of Sweetener Coated on Outer Surface of Mixed Powder through Sensory Evaluation

The compositions for preparing cotton candy of Example 18 to Example 25 and Comparative Example 1 were each used to prepare cotton candy in a cotton candy making machine, and the results of sensory evaluation thereof are shown in Table 8 below.

In detail, the sensory evaluation was conducted on 30 researchers in the institute, and the evaluation items were overall preference, sweetness characteristic preference, sweetness intensity (based on 5 equivalent to sugar), mouthfeel preference, and melting speed in the mouth (1: slow to 9: fast). Each item was measured on a 9-point scale.

As a result, among the compositions for preparing cotton candy, in which the outer surface of the mixed powder was coated with enzymatically modified stevia (Daepyung), steviol glycoside (Daepyung), aspartame (Daesang), or sucralose (T&L) as a sugar substitute sweetener to supplement the sweetness of the aftertaste, Example 20 and Example 21 coated with steviol glycoside and Example 24 and Example 25 coated with sucralose were confirmed to have the best sensory properties. In terms of the melting speed in the mouth, the compositions for preparing cotton candy comprising 1 part by weight of 30% hydrogenated palm oil (Example 18, Example 20, Example 22, and Example 24) were faster than the compositions for preparing cotton candy comprising 3 parts by weight of hydrogenated palm oil (Example 19, Example 21, Example 23, and Example 25), but there was no significant difference in preference.

In particular, Example 20 to Example 21 and Example 24 to Example 25, in which the outer surface of the mixed powder was coated with steviol glycoside or sucralose, had sensory preferences similar to those of the cotton candy of Comparative Example 1, which was prepared with only sugar.

**[Table 8]**

| | Comparative Example 1 | Exampl le 18 | Exampl e 19 | Exampl e 20 | Exampl e 21 | Exampl e 22 | Exampl e 23 | Exampl e 24 | Exampl e 25 |
|---|---|---|---|---|---|---|---|---|---|
| Overall preference | 8.5 | 7.3 | 6.8 | 8.4 | 8.1 | 7.2 | 6 | 8 | 7.8 |
| Sweetness preference | 8.3 | 7.7 | 7.2 | 6.7 | 6.6 | 5.9 | 6.1 | 7.3 | 7.4 |
| Sweetness intensity (based on 5 equivalent to sugar) | 5 | 4.2 | 4.3 | 4.8 | 4.7 | 3.7 | 3.6 | 5.6 | 5.3 |
| Mouthfeel preference | 7.8 | 7.2 | 6.9 | 7.2 | 6.9 | 7.2 | 6.9 | 7.2 | 6.9 |
| Melting speed in mouth (1: slow ~ 9: fast) | 8 | 7 | 6.6 | 7.1 | 6.3 | 6.2 | 5.9 | 7.6 | 7.1 |

### Experimental Example 5: Determination of Optimal Conditions for Cotton Candy Preparation through Implementation of Cotton Candy

The compositions for preparing cotton candy of Example 24 to Example 25 and Comparative Example 1 were each used to prepare cotton candy in a cotton candy making machine under various melting temperature conditions (220°C to 270°C) and distribution plate rotation speed conditions (3500 rpm to 4000 rpm), and the cotton candies were visually examined, as shown in Tables 9 to 11 below.

As a result, it was confirmed that when preparing cotton candy using the compositions for preparing cotton candy of Example 24 (Table 10) and Example 25 (Table 11), cotton candy floss was discharged and cotton candy was realized at a melting temperature of 220°C to 250°C, and when preparing cotton candy using the composition for preparing cotton candy of Comparative Example 1 (Table 9), cotton candy floss was discharged and cotton candy was realized at a melting temperature of 240°C to 260°C. In addition, in terms of the distribution plate rotation speed, all of Example 24 to Example 25 and Comparative Example 1 showed that cotton candy was realized at 3600 rpm to 3800 rpm.

**[Table 9]**

| Distribution plate rotation speed (rpm)/Melting temperature (°C) | 220°C | 230°C | 240°C | 250°C | 260°C | 270°C |
|---|---|---|---|---|---|---|
| 3500 rpm | X | X | X | X | X | X |
| 3600 rpm | X | X | △ | ○ | ○ | X |
| 3700 rpm | X | X | △ | ○ | ○ | X |
| 3800 rpm | X | X | △ | ○ | ○ | X |
| 3900 rpm | X | X | X | X | X | X |
| 4000 rpm | X | X | X | X | X | X |

**[Table 10]**

| Distribution plate rotation speed (rpm)/Melting temperature (°C) | 220°C | 230°C | 240°C | 250°C | 260°C | 270°C |
|---|---|---|---|---|---|---|
| 3500 rpm | X | X | X | X | X | X |
| 3600 rpm | X | △ | ○ | ○ | X | X |
| 3700 rpm | X | △ | ○ | ○ | X | X |
| 3800 rpm | X | △ | ○ | ○ | X | X |
| 3900 rpm | X | X | X | X | X | X |
| 4000 rpm | X | X | X | X | X | X |

**[Table 11]**

| Distribution plate rotation speed (rpm)/Melting temperature (°C) | 220°C | 230°C | 240°C | 250°C | 260°C | 270°C |
|---|---|---|---|---|---|---|
| 3500 rpm | X | X | X | X | X | X |
| 3600 rpm | ○ | ○ | △ | X | X | X |
| 3700 rpm | ○ | ○ | △ | X | X | X |
| 3800 rpm | ○ | ○ | △ | X | X | X |
| 3900 rpm | X | X | X | X | X | X |
| 4000 rpm | X | X | X | X | X | X |

| | | | | | | |
|---|---|---|---|---|---|---|
| * Examining whether cotton candy floss is discharged and moldable (∘: Excellent, △: Good, X: Not possible) | | | | | | |

### Preparation Example: Composition for Preparing Reduced Sugar Cotton Candy with Improved Effects of Preventing Moisture Absorption and Retaining Crystal Form

50 parts by weight to 70 parts by weight of sugar and 30 parts by weight to 50 parts by weight of erythritol were subjected to primary mixing in a powder mixer for 10 minutes, and then 1 part by weight to 3 parts by weight of 30% hydrogenated palm oil and 0.5 parts by weight to 1 part by weight of sucrose fatty acid ester were added and subjected to secondary mixing to prepare a mixed powder form. Sucralose, dissolved as a sweetener in hot water at 80°C or higher to make a 50% solution, was sprayed onto the mixed powder for 1 minute three times under mixing to evenly coat the outer surface of the mixed powder. Thereafter, the mixed powder coated with sucralose was treated with hot air at 85°C or higher for 10 minutes in a mixer to remove moisture, thereby preparing a composition for preparing cotton candy in the form of a mixed powder, of which the outer surface was coated with sucralose.

The composition for preparing cotton candy thus prepared was put into a heating head of a cotton candy making machine of FIG. 1 using a spoon, and treated at a temperature of 220°C to 250°C to instantly melt the mixed powder. The molten product was fed to a distribution plate at 3600 rpm to 3800 rpm, and allowed to cool and form floss-like crystals as it spread and separated thinly and long through the holes and mesh plates. The floss-like crystals formed on the distribution plate were wound in layers around a stick-shaped shaft to prepare cotton candy.

Through this, the composition for preparing cotton candy was prepared, in which sugar alcohol and the sweetener were used to reduce the sugar content, the non-dairy creamer as fat and oil and the emulsifier were added to prevent moisture absorption of sugar alcohols and to minimize oxidation of remaining fat and oil, and the same level of sweetness as cotton candy with only sugar is achieved through the process of coating the powder with the sweetener. When this composition was fed into a cotton candy making machine, the optimal melting temperature conditions for discharge of cotton candy floss and easy implementation of cotton candy were identified. Accordingly, it is possible to prepare cotton candy that is not harmful to health due to the reduction of sugars, retains its shape, is not sticky due to the effects of preventing moisture absorption and retaining the crystal form, and exhibits a sweetness equivalent to that of cotton candy with only sugar.

Based on the above description, it will be understood by those skilled in the art that the present disclosure may be implemented in a different specific form without changing the technical spirit or essential characteristics thereof. **In** this regard, it should be understood that the above embodiment is not limitative, but illustrative in all aspects. **The** scope of the disclosure is defined by the appended claims rather than by the description preceding them, and therefore all changes and modifications that fall within the metes and bounds of the claims, or equivalents of such metes and bounds, are therefore intended to be embraced by the claims.

## Claims

1. A composition for preparing cotton candy, the composition comprising sugar, sugar alcohol, vegetable fat and oil, and an emulsifier,
wherein the composition comprises 1 part by weight to 3 parts by weight of the vegetable fat and oil, and 0.5 parts by weight to 1 part by weight of the emulsifier, based on 100 parts by weight of the total sugar and sugar alcohol.

2. The composition of claim 1, wherein the composition comprises the sugar and sugar alcohol at a weight ratio of 1:1 to 4:1.

3. The composition of claim 1, wherein the composition comprises 50 parts by weight to 70 parts by weight of the sugar, 30 parts by weight to 50 parts by weight of the sugar alcohol, 1 part by weight to 3 parts by weight of the vegetable fat and oil, and 0.5 parts by weight to 1 part by weight of the emulsifier.

4. The composition of claim 1, wherein the sugar alcohol is any one or more selected from the group consisting of erythritol, maltitol, xylitol, and sorbitol.

5. The composition of claim 1, wherein the vegetable fat and oil is non-dairy creamer.

6. The composition of claim 5, wherein the non-dairy creamer comprises any one or more selected from the group consisting of hydrogenated palm oil, sunflower oil, and palm oil.

7. The composition of claim 6, wherein the non-dairy creamer comprises any one or more selected from the group consisting of hydrogenated palm oil, sunflower oil, and palm oil at a weight ratio of 10% to 50% with respect to the total weight of the vegetable fat and oil.

8. The composition of claim 1, wherein the emulsifier is any one or more selected from the group consisting of sucrose fatty acid ester, lecithin, and glycerin fatty acid ester.

9. The composition of claim 1, wherein the composition is in the form of powder.

10. The composition of claim 9, wherein the composition is a powder, the outer surface of which is coated with a sweetener.

11. The composition of claim 10, wherein the sweetener is any one or more selected from the group consisting of enzymatically modified stevia, steviol glycoside, aspartame, sucralose, and allulose.

12. The composition of claim 10, wherein the sweetener is comprised in hot water at a concentration of about 10% by weight to about 50% by weight.

13. A method of preparing cotton candy, the method comprising the steps of:
a) preparing a molten product by melting a composition for preparing cotton candy, the composition comprising sugar, sugar alcohol, vegetable fat and oil, and an emulsifier, wherein the composition comprises 1 part by weight to 3 parts by weight of the vegetable fat and oil, and 0.5 parts by weight to 1 part by weight of the emulsifier, based on 100 parts by weight of the total sugar and sugar alcohol; and
b) feeding the molten product to a distribution plate to form floss-like crystals and preparing cotton candy with the crystals.

14. The method of claim 13, wherein the composition of the step a) is in the form of powder.

15. The method of claim 14, wherein the composition is a powder, the outer surface of which is coated with a sweetener.

16. The method of claim 15, wherein the coating is to prepare the sweetener-coated powder by spraying the sweetener dissolved in hot water onto the powder while mixing the same.

17. The method of claim 16, wherein the coating is to remove moisture by additionally treating the sweetener-coated powder with hot air.

18. The method of claim 13, wherein the melting is to melt the composition of the step a) at 220°C to 250°C.

19. The method of claim 13, wherein the floss-like crystals of the step b) are formed on the distribution plate that rotates at 3600 rpm to 3800 rpm.

20. Cotton candy prepared by the method of any one of claims 13 to 19.

21. The cotton candy of claim 20, wherein the cotton candy has an effect of preventing moisture absorption.

22. The cotton candy of claim 20, wherein the cotton candy has an effect of retaining the crystal form.

23. Use of a composition comprising sugar, sugar alcohol, vegetable fat and oil, and an emulsifier in preparing cotton candy.
